# EUROPÄISCHE PATENTSCHRIFT

(11) **EP 0 937 432 B1**
(45) Veröffentlichungstag und Bekanntmachung des Hinweises auf die Patenterteilung: **04.12.2002**
(21) Anmeldenummer: 99810025.9
(22) Anmeldetag: 15.01.1999
(51) Int. Cl.: A47J 31/40

(54) **Kaffeemaschine**
Coffee machine
Machine à café

(30) Priorität: 26.01.1998 CH 16998
(43) Veröffentlichungstag der Anmeldung: 25.08.1999
(73) Patentinhaber: Fianara International B.V., 1079 LH Amsterdam (NL)
(72) Erfinder: Schmed, Arthur, 8635 Oberdürnten (CH)
(74) Vertreter: Rottmann, Maximilian R.

(56) Entgegenhaltungen:
- EP-A- 0 184 561
- EP-A- 0 484 277
- EP-A- 0 538 191
- FR-A- 2 628 963

## Beschreibung

Die Erfindung betrifft eine Kaffeemaschine nach dem Oberbegriff des Anspruchs 1.

Bei Kaffeemaschinen der hier zur Rede stehenden Art wird ein Kaffeegetränk im Prinzip derart zubereitet, dass einer Brühkammer Kaffeepulver zudosiert, dieses von einem beweglichen Kolben verdichtet und anschliessend vom Brühwasser unter hohem Druck durchströmt wird. Zum Verschliessen der Brühkammer ist auf der einen Seite des Brühzylinders ein, üblicherweise feststehender, Verschlusskolben angeordnet, gegenüber welchem der Brühzylinder bewegbar ist. Der zum Verdichten des Kaffeepulvers vorgesehene Kolben ist im Brühzylinder aufgenommen und wird nebst dem Verdichten des Kaffeepulvers auch dazu verwendet, den ausgelaugten Kaffeekuchen aus dem Brühzylinder auszustossen. Zum Erhitzen des Brühwassers ist ein Heisswasserbereiter vorgesehen, der das Brühwasser über eine Verbindungsleitung dem einen der beiden Kolben zuführt, von wo es über eine am Kolben angeordnete Siebplatte in den Brühraum gelangt und das Kaffeepulver gleichmässig durchströmt.

Aus der EP 0 538 191 ist eine gattungsgemässe Kaffeemaschine bekannt, bei welcher zwei Teilmodule vorgesehen sind. Dabei ist die Brüheinrichtung als erstes Teilmodul ausgebildet, das mit dem zweiten Teilmodul in Wirkverbindung steht. Das zweite Teilmodul ist auf Gleitschienen angeordnet und umfasst im wesentlichen einen Antriebsmotor sowie ein Getriebe. Auf dem ersten Teilmodul sind alle einer Verschmutzung durch Kaffeepulver oder durch das Kaffeegetränk unterworfenen Teile, namentlich ein Brühzylinder, ein Verschlusskolben, ein Brühkolben sowie eine Antriebsspindel, angeordnet. Im Gehäuse selber sind ein Frischwassertank, eine Pumpe sowie ein Heisswasserbereiter aufgenommen. Um das vom Heisswasserbereiter erhitzte Brühwasser der Brüheinrichtung zuzuführen, ist eine Verbindungsleitung vorgesehen, deren Länge in etwa der Breite der Kaffeemaschine entspricht. Um das erste, die Brüheinrichtung umfassende Teilmodul für Reinigungsarbeiten aus der Kaffeemaschine herausnehmen zu können, müssen unter anderem Kopplungsmittel vorgesehen werden, mittels welchen die genannte Verbindungsleitung aufgetrennt werden kann. Da das Brühwasser zum Aufbrühen des in der Brühkammer aufgenommenen Kaffeepulvers üblicherweise einen Druck zwischen 10 und 15 bar aufweist, müssen solche Kopplungsmittel entsprechend aufwendig gestaltet sein.

Als Nachteil bei derart ausgestalteten Kaffeemaschinen hat sich herausgestellt, dass die Qualität des zubereiteten Kaffeegetränks gewissen Schwankungen unterliegt. Dies kann insbesondere dann festgestellt werden, wenn nacheinander zwei oder mehr Kaffeegetränke zubereitet werden. In diesem Fall ist nämlich das erste der zubereiteten Kaffeegetränke deutlich weniger warm als die nachfolgenden. Aber auch geschmacklich lassen sich Unterschiede zwischen dem ersten und den unmittelbar nachfolgenden Kaffeegetränken feststellen. Dies lässt sich folgendermassen erklären: Wenn das erste Kaffeegetränk zubereitet wird, ist sowohl die vom Heisswasserbereiter zur Brühkammer führende Brühwasserzuleitung wie auch das Kopplungsmittel und der an der Brühwasserzuleitung angeschlossene Kolben der Brühkammer kalt. Dadurch wird bewirkt, dass sich das Brühwasser, welches den Heisswasserbereiter mit einer Temperatur von ca. 90 bis 95°C verlässt, merklich abkühlt, bevor es das in der Brühkammer aufgenommene Kaffeepulver durchströmt. Wird nun unmittelbar nachher ein weiteres Kaffeegetränk zubereitet, so sind die genannten Teile noch warm und das Brühwasser gelangt mit einer höheren Temperatur in die Brühkammer. Durch die relativ lange Verbindungsleitung zwischen Heisswasserbereiter und Brühkammer wird die Temperatur des Brühwassers jedoch in jedem Fall in unerwünschter Weise herabgesetzt.

Es ist daher die Aufgabe der Erfindung eine Kaffeemaschine der im Oberbegriff des Anspruchs 1 genannten Art derart zu verbessern, dass die Qualität der zubereiteten Kaffeegetränke verbessert und der konstruktive Aufbau vereinfacht wird.

Diese Aufgabe wird durch die im Kennzeichen des Anspruchs 1 angeführten Merkmale gelöst.

Durch einen am Heisswasserbereiter angeformten oder direkt an diesem befestigten Verschlusskolben fällt sowohl die Verbindungsleitung zwischen Heisswasserbereiter und Verschlusskolben wie auch das Kopplungsmittel weg. Ausserdem wird der Verschlusskolben durch den Heisswasserbereiter erwärmt. All dies trägt dazu bei, dass die Temperatur des Brühwassers beim Eintritt in die Brühkammer konstant ist und das Kaffeepulver vom Brühwasser immer mit der optimalen Temperatur durchströmt werden kann.

Ein weiterer Vorteil der mit den genannten Merkmalen versehenen Kaffeemaschine besteht darin, dass diese wesentlich kompakter gestaltet werden kann, da ein Heisswasserbereiter mit angeformtem oder direkt an diesem befestigten Verschlusskolben kleiner ist als ein Heisswasserbereiter und ein separater Verschlusskolben. Ausserdem kann die Verbindungsleitung zwischen Heisswasserbereiter und Verschlusskolben mitsamt den zugehörigen Kopplungsmitteln eingespart werden, wodurch die Kaffemaschine letztlich einfacher aufgebaut ist und auch preisgünstiger hergestellt werden kann.

Bevorzugte Ausführungsbeispiele der Kaffeemaschine sind in den abhängigen Ansprüchen 2 bis 19 umschrieben.

Bei einem bevorzugten Ausführungsbeispiel wird vorgeschlagen, dass der Heisswasserbereiter zusammen mit dem Verschlusskolben fest in die Kaffeemaschine eingebaut sind und dass ein lösbar in die Kaffeemaschine eingesetztes Brühmodul vorgesehen ist, welches zumindest den Brühzylinder und den Brühkolben umfasst. Diese Ausgestaltung bietet den Vorteil, dass das Brühmodul sehr kompakt ausgestaltet sein kann und dass auf eine auftrennbare Kupplung zum Zuführen des Brühwassers verzichtet werden kann.

Nachfolgend wird ein bevorzugtes Ausführungsbeispiel der Kaffeemaschine anhand von Zeichnungen näher erläutert. In diesen Zeichnungen zeigt:
Fig. 1 eine Seitenansicht eines Heisswasserbereiters und eines Brühmoduls in der Grundstellung und in teilweise geschnittener Darstellung;
Fig. 2 den Heisswasserbereiter und das Brühmodul gemäss Fig. 1 in der Füllstellung;
Fig. 3 den Heisswasserbereiters und das Brühmodul gemäss Fig. 1 in Brühstellung;

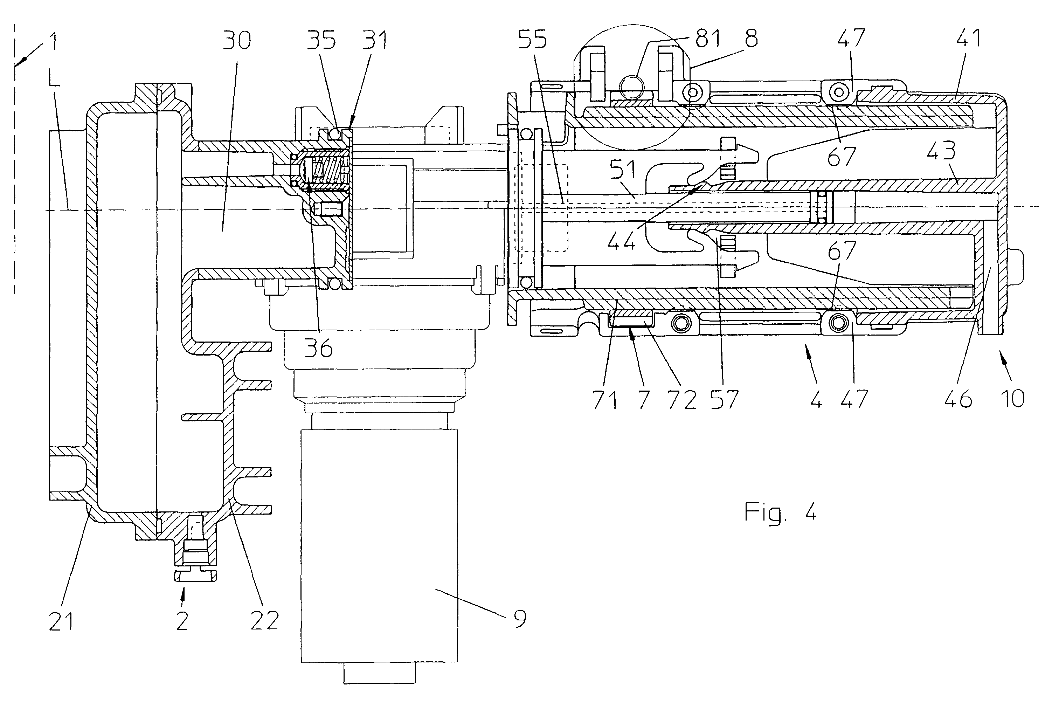

Fig. 4 den Heisswasserbereiters und das Brühmodul gemäss Fig. 1 in der Ausstosstellung;
Fig. 5 eine Draufsicht auf den Heisswasserbereiter, und
Fig. 6 eine Detailansicht des Verschlusskolbens.

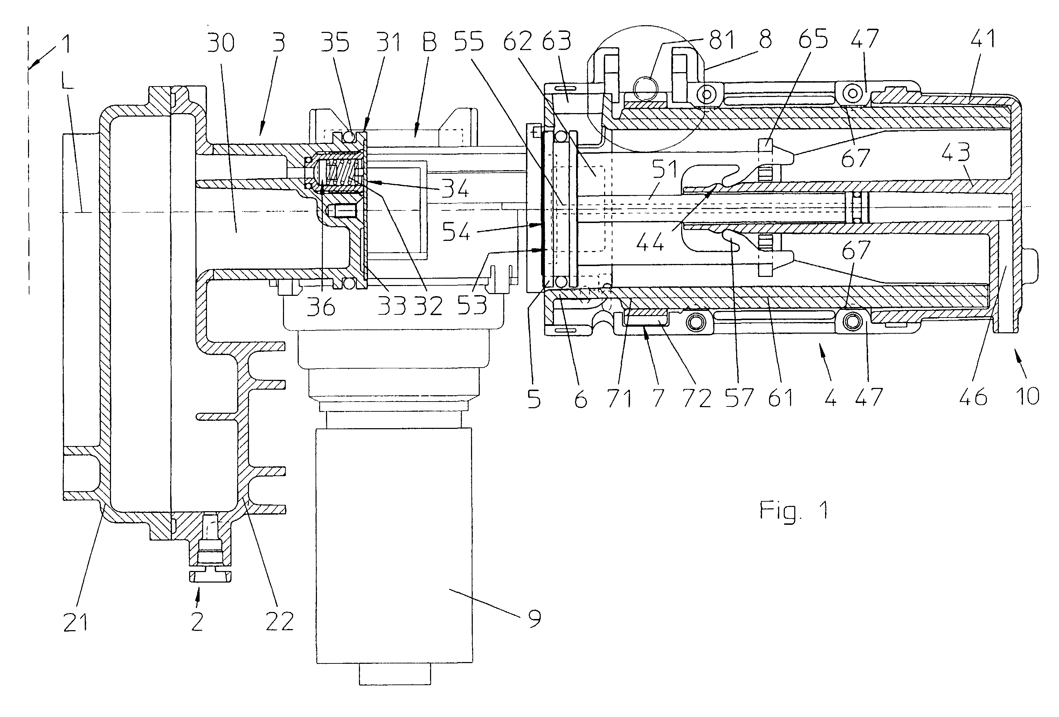

Anhand der Figur 1 wird der prinzipielle Aufbau der Kaffeemaschine näher erläutert, wobei aus dieser Darstellung nur die im Zusammenhang mit der Erfindung wesentlichen Teile der Kaffeemaschine hervorgehen. Nebst dem andeutungsweise eingezeichneten Gehäuse 1 sind aus dieser Darstellung ein Heisswasserbereiter 2, ein Verschlusskolben 3, ein Brühmodul 4, ein Antriebsmotor 8, ein Mahlwerk 9 sowie ein Getränkeauslass 10 ersichtlich.

Der als Boiler ausgebildete Heisswasserbereiter 2 besteht aus zwei Halbschalen 21, 22 wovon an der einen 22 direkt der Verschlusskolben 3 angeformt ist. Der Verschlusskolben 3 ist im wesentlichen hohl ausgebildet und steht mit dem Innenraum des Heisswasserbereiters 2 in Verbindung. Dadurch wird der Verschlusskolben 3 vom erhitzten Brühwasser geflutet und homogen erhitzt. Der Vorderteil des Verschlusskolbens 3 besteht aus einem Kunststoffaufsatz 31. Dieser Kunststoffaufsatz 31 ist mit einer hohlzylindrisch ausgebildeten Kammer 32 versehen, in der ein Ventil 36 aufgenommen ist. Das Ventil 36 übernimmt zwei Funktionen: Einerseits wirkt es als Überdruckventil, welches bei einem vorbestimmten Überdruck im Boiler 3 öffnet; andererseits wirkt es als Rückschlagventil, welches ein Zurückfliessen von Brühwasser aus der Brühkammer in den Boiler 3 verhindert wird. Auf der der Brühkammer zugewandten Vorderseite weist der Kunststoffaufsatz 31 eine mit der hohlzylindrisch ausgebildeten Kammer 32, bzw. dem Auslass des Ventils 36 in Verbindung stehende Vertiefung 33 auf, die mit einer Siebplatte 34 abgedeckt ist. Durch die Vertiefung 34 und die Siebplatte 33 wird eine gleichmässige Verteilung des Brühwassers bezüglich des Querschnitts der Brühkammer bzw. des Brühzylinders 6 gewährleistet. Auf der Vorderseite ist der Verschlusskolben 3 zudem mit einem Dichtring 35 versehen.

Nebst einem Gehäuse 41 weist das Brühmodul 4 im wesentlichen einen Brühkolben 5, einen Brühzylinder 6 sowie ein Betätigungsglied 7 auf. Der Brühzylinder 6 ist im wesentlichen hohlzylindrisch ausgebildet und am Umfang mit einem Aussengewinde versehen. Der Brühkolben 5 ist längsbeweglich im Brühzylinder 6 aufgenommen. Das in achsialer Richtung fixierte Betätigungsglied 7 ist drehbar und konzentrisch zum Brühzylinder angeordnet und mit einem Innengewinde 71 versehen, das in das Aussengewinde 61 des Brühzylinders 6 eingreift. Um ein Verdrehen des Brühzylinders 6 um seine Längsachse zu verhindern, ist das Gehäuse 41 des Brühmoduls 4 mit Führungsmitteln 47 versehen, welche in korrespondierende auf der Aussenseite des Brühzylinders 6 angeordnete Ausnehmungen 67 eingreifen.

Auf der Aussenseite ist das Betätigungsglied 7 mit Zähnen 72 in Form eines Zahnrads versehen. Der Antriebsmotors 8 ist seitlich des Brühmoduls 6 angeordnet und weist ein Antriebsglied 81 in Form einer Schnecke auf, welches mit den Zähnen 72 des Betätigungsglieds 7 in Eingriff steht, wenn sich der Antriebsmotor 8 in der hier gezeigten Wirkstellung befindet. Damit der Antriebsmotor 8 von der Wirk- in eine Ruhestellung bewegt werden kann, ist dieser schwenkbar aufgehängt. Dies ist insofern wichtig, da der Antriebsmotor 8 vor dem Herausnehmen des Brühmoduls 4 in die Ruhestellung verschwenkt werden muss, damit dessen Antriebsglied 81 nicht mehr im Eingriff mit den Zähnen des Betätigungsglieds 7 steht. Vorzugsweise sind zwischen der Brüheinheit 4 und dem Antriebsmotor 8 wirkende Mittel vorgesehen, um den Antriebsmotor 8 beim Einsetzen des Brühmoduls 4 von der Ruhe- in die Wirkstellung zu Verschwenken, in welcher das Antriebsglied 81 des Antriebsmotors 8 in die Zähne 72 des Betätigungsglieds 7 eingreift. Solche Mittel sind zugunsten einer übersichtlichen Darstellung jedoch nicht eingezeichnet.

Auf der Vorderseite ist der Brühzylinder 6 mit zwei radial verlaufenden Öffnungen 62, 63 versehen, über welche dem Brühzylinder 6 gemahlener Kaffee zudosiert werden kann. Durch zwei Öffnung 62, 63 wird ermöglicht, dass zwei unterschiedliche Kaffeesorten sequentiell zudosiert werden können. Über die eine Öffnung 63 kann dem Brühzylinder 6 vom Mahlwerk 9 direkt Kaffeepulver zudosiert werden, wenn sich der Brühzylinder 6 in der nachfolgend noch näher erläuterten Füllstellung befindet. Die zweite Öffnung 62 ist dazu vorgesehen, dem Brühzylinder alternativ über eine im Gehäuse der Kaffeemaschine angeordnete Zuführöffnung eine weitere Kaffeesorte zuzuführen. Da nur ein Mahlwerk 9 vorgesehen ist, muss der zweiten Zuführöffnung 62 bereits gemahlener Kaffee zugeführt werden. Eine weitere Möglichkeit besteht darin, dass zwei Mahlwerke und zwei korrespondierende Öffnungen im Brühzylinder vorgesehen werden, so dass zwei unterschiedliche Kaffeegetränke aus frisch gemahlenem Kaffee zubereitet werden können. Schliesslich kann der Brühzylinder auch mit drei radialen Öffnungen versehen werden, wovon zwei von je einem Mahlwerk beschickt werden, währenddem die dritte Öffnung wiederum mit einer im Gehäuse der Kaffeemaschine angeordneten Zuführöffnung in Verbindung steht.

Das Gehäuse 41 des Brühmoduls 4 weist auf der Innenseite einen rohrförmigen Ansatz 43 auf, der am vorderen Ende auf der Aussenseite mit einer Einkerbung 44 versehen ist. Am hinteren Ende ist der rohrförmige Ansatz 43 mit einem abgebogenen Auslass 46 versehen, über den das Kaffeegetränk in den Getränkeauslass 10 fliessen kann.

Der im Brühzylinder 6 aufgenommene Brühkolben 5 ist auf der Rückseite mit einer rohrförmigen Kolbenstange 51 versehen, über welche das aufgebrühte Kaffeegetränk aus der Brühkammer ausströmen kann. Damit das aufgebrühte Kaffeegetränk von der Vorderseite des Brühkolbens 5 auf dessen Rückseite gelangen kann, weist der Brühkolben 5 auf seiner Vorderseite eine Vertiefung 53 auf die von einer Siebplatte 54 abgedeckt ist. Die Vertiefung 53 ist über einen Kanal 55 mit der rohrförmigen Kolbenstange 51 verbunden. Zudem weist der Brühkolben 5 auf seiner Rückseite Rastnocken 57 auf, welche in der in der Fig. 1 dargestellten Ausgangsstellung der Kaffeemaschine in der Einkerbung 44 des rohrförmigen Ansatzes 43 eingerastet sind. Im weiteren weist der Brühzylinder 6 auf der Innenseite Mitnehmer 65 zum kraftschlüssigen Mitnehmen des Brühkolbens 5 auf. Die Funktion der vorgängig angeführten Elemente wird anschliessend noch näher erläutert.

Wie aus dieser Darstellung ersichtlich ist, sind sowohl das Brühmodul 4 wie auch der Verschlusskolben 3 horizontal in die Kaffeemaschine angeordnet bzw. die Längsachsen verlaufen horizontal.

Natürlich kann das Brühmodul mitsamt dem Verschlusskolben auch vertikal in der Kaffeemaschine angeordnet werden. In diesem Fall wird der Heisswasserbereiter oberhalb des Brühzylinders angeordnet, so dass die Brühkammer vom Brühwasser von oben nach unten durchströmt wird. Ausserdem kann auch auf die radialen Öffnungen im Brühzylinder verzichtet werden, da die Zufuhr des Kaffeepulvers über seitlich schräg vom Brühzylinder angeordnete Mittel erfolgen kann.

Das Brühmodul 4 ist mittels eines nicht näher dargestellten Verschlusses, beispielsweise einem Bajonettverschluss, lösbar in die Kaffeemaschine eingesetzt.

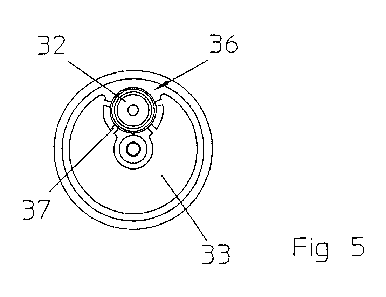

Fig. 5 zeigt den Verschlusskolben 3 in einer Draufsicht. Aus dieser Darstellung sind nebst dem Ventil 36 und der Vertiefung 33 Kanäle 37 ersichtlich, welche das Ventil 36 bzw. die Kammer 37 mit der Vertiefung 33 verbinden.

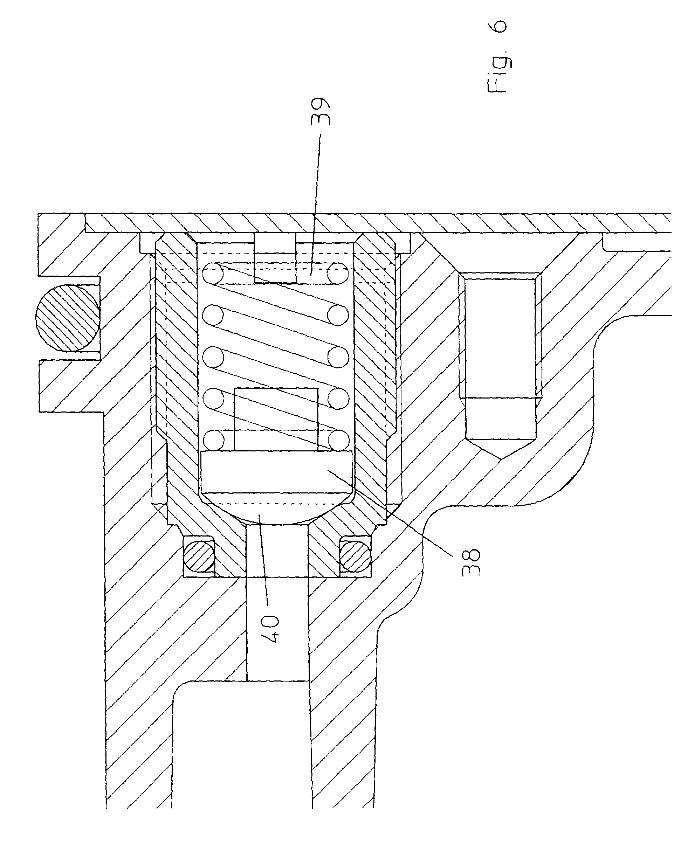

Fig. 6 zeigt eine Detailansicht des Verschlusskolbens 33. Das Ventil 36 besteht aus einem Ventilkörper 38 der von einer Feder 39 vorgespannt ist. Die Dichtfläche des Ventilkörpers 38 ist dabei als Kugelabschnitt ausgebildet. Sobald ein vorbestimmter Überdruck im Boiler erreicht ist, wird der Ventilkörper 38 entgegen der Vorspannkraft der Feder 39 verschoben. Ausserdem wird durch den Ventilkörper 38 verhindert, dass Brühwasser aus der Brühkammer in den Boiler 3 zurückfliesst.

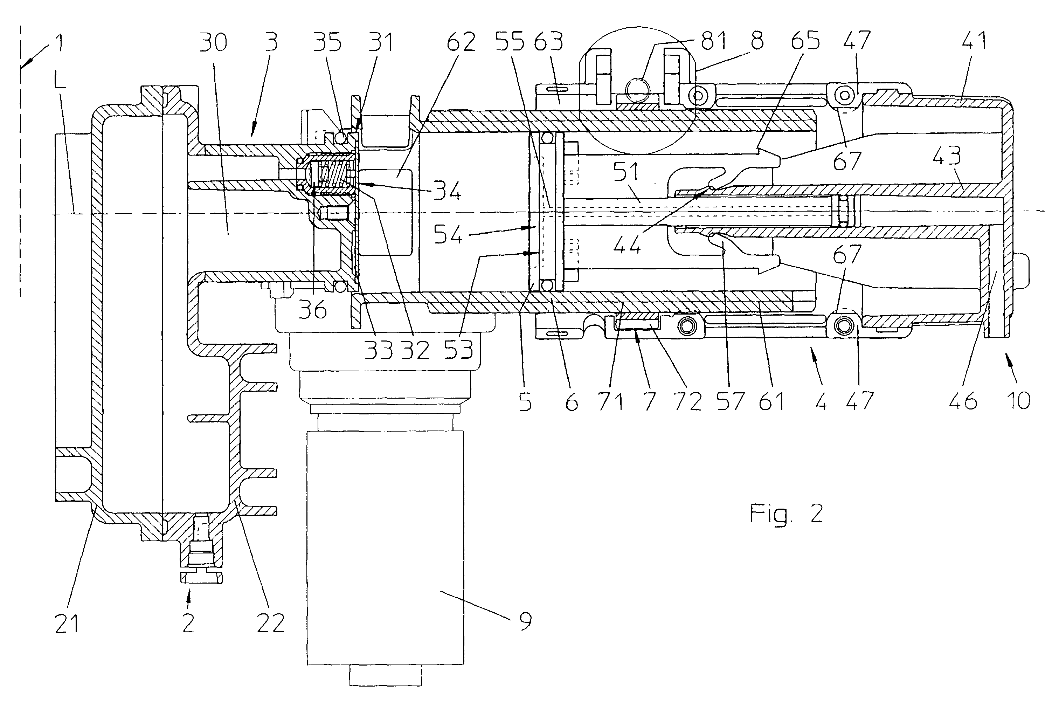

Die Funktionsweise dieser Kaffeemaschine stellt sich wie folgt dar: Aus der in der Fig. 1 dargestellten Ausgangsposition wird der Brühzylinder in die in Fig. 2 dargestellte Füllstellung gefahren, in der der Verschlusskolben 3 den Brühzylinder 6 endseitig abschliesst. Das Verschieben des Brühzylinders 6 erfolgt mittels des Antriebsmotors 8. Dabei wird über das Antriebsglied 81 des Antriebsmotors 8 das Betätigungsglied 7 gedreht, so dass letzeres mittels seines in das Aussengewinde 61 des Brühzylinders 6 eingreifenden Innengewindes 71 den Brühzylinder 6 verschiebt. Beim Vorschieben des Brühzylinders 6 verharrt der Brühkolben 5 in der Ausgangsstellung, da dessen Rastnocken 57 in der Einkerbung 44 des rohrförmigen Ansatzes 43 eingerastet sind. Sobald sich der vordere Rand des Brühzylinders 6 über den Verschlusskolben 3 geschoben hat, wird dem Brühzylinder 6 vom Mahlwerk 9 frisch gemahlenes Kaffeepulver über die eine Ausnehmung 62 zudosiert. Danach wird der Brühzylinder 6 weiter verschoben, wobei der Brühkolben 5 vom Brühzylinder 6 nunmehr mitgenommen wird, da sich die Mitnehmer 65 an der Rückseite des Brühkolbens 5 anlegen. Durch den sich in Richtung des Verschlusskolbens 3 bewegenden Brühkolben 5 wird das im Brühzylinder 6 aufgenommene Kaffeepulver verdichtet. Beim Vorschieben des Brühzylinders 6 legt sich auch der Dichtring 35 des Verschlusskolbens 3 an der Innenseite des Brühzylinders 6 an, so dass durch den Brühzylinder 6 und die beiden Kolben 3, 5 nunmehr eine abgeschlossene Brühkammer B gebildet wird. Die Vorwärtsbewegung des Brühzylinders 6 zusammen mit dem Brühkolben 5 wird gestoppt, sobald das Kaffeepulver einen vorbestimmten Verdichtungsgrad aufweist, d.h mit einer bestimmten Kraft verdichtet wird. Das Stoppen der Vorwärtsbewegung des Brühzylinders 6 kann beispielsweise durch eine Drehmomentüberwachung des Antriebsmotors 8 erreicht werden. Nachdem die Vorwärtsbewegung des Brühzylinders 6 gestoppt ist, befindet sich das Brühmodul 4 in der Brühstellung. Anstelle einer Drehmomentüberwachung des Antriebsmotors 8 bietet sich beispielsweise auch eine Drehzahlüberwachung an.

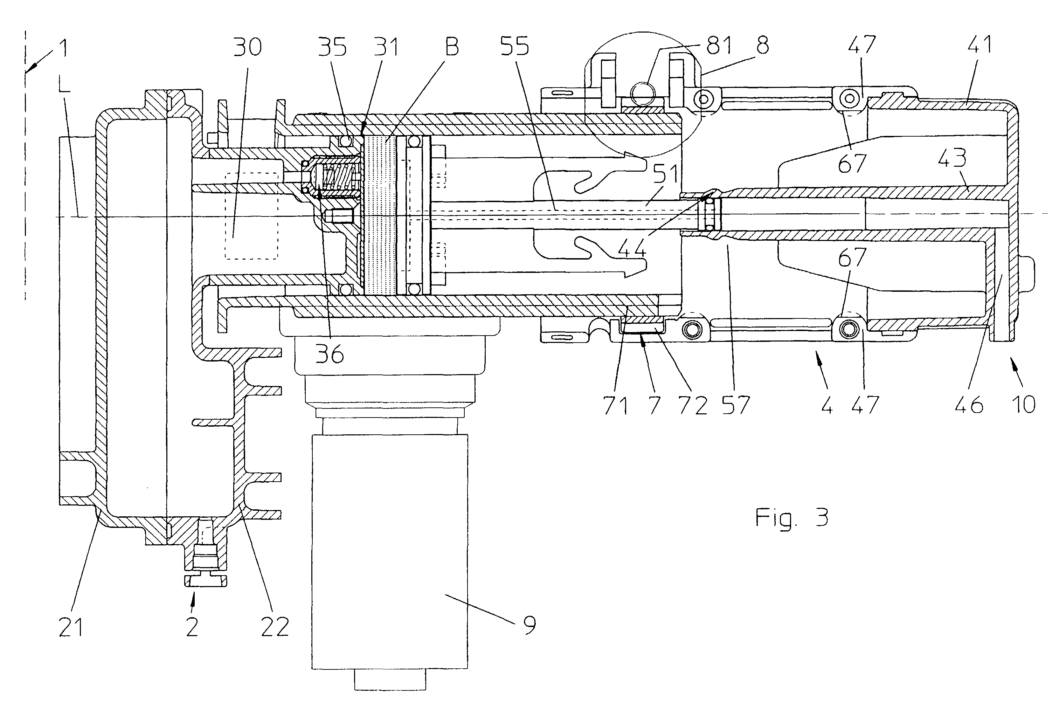

Die Brühstellung ist aus der Fig. 3 ersichtlich. Um das verdichtete Kaffeepulver aufzubrühen, wird nun die aus dieser Darstellung nicht ersichtliche Pumpe in Betrieb gesetzt. Dadurch wird ein Überdruck im Boiler 2 aufgebaut und das Brühwasser kann vom Boiler 2 über das Ventil 36 auf die Rückseite der Siebplatte 33 und von da über letztere in die Brühkammer B strömen wo das darin aufgenommene Kaffeepulver aufgebrüht wird. Auf der anderen Seite der Brühkammer B kann das nunmehr als Kaffegetränk bezeichnete Brühwasser über die im Brühkolben 5 angeordnete Siebplatte 54 durch den Brühkolben 5 hindurchtreten und über die hohl ausgebildete Kolbenstange 51, den rohrförmigen Ansatz 43 und den abgebogenen Auslass 46 schliesslich in den Getränkeauslass 10 fliessen.

Nach dem Aufbrühen des Kaffegetränks wird der Brühzylinder 6 in die Gegenrichtung bewegt, indem die Drehrichtung des Antriebsmotors 8 geändert wird. Dabei wird der Brühkolben 5 vom Brühzylinder 6 mitgenommen, da die Reibung zwischen dem Dichtring 52 des Brühkolbens 5 und dem Brühzylinder 6 ausreicht, den Brühkolben 5 mitzunehmen. An einem bestimmten Punkt bei der Rückwärtsbewegung des Brühzylinders 6 wird der Brühkolben 5 von nicht näher eingezeichneten Mitnehmern formschlüssig mitgezogen, bis die Rastnocken 57 des Brühkolbens 5 in der Einkerbung des rohrförmigen Ansatzes 43 einrasten, so dass der Brühkolben 5 in seiner Endstellung fixiert ist. Zusätzlich zu den Rastmitteln, 44, 57 kann auch noch ein hinterer Anschlag vorgesehen werden, damit der Brühkolben 5 sicher in seiner Endstellung verharrt. Der Brühzylinder 6 wird jedoch weiter verschoben, wourch eine Relativbewegung zwischen dem Brühzylinder 6 und dem Brühkolben 5 entsteht, so dass der ausgelaugte Kaffeekuchen aus dem Brühzylinder 6 hinausgeschoben wird, bis schliesslich der Brühkolben 5 bündig mit der Vorderseite des Brühylinders 6 abschliesst. Der ausgelaugte Kaffeekuchen fällt nun durch das Eigengewicht nach unten in eine nicht eingezeichnete Auffangschale. Um das sichere Entfernen des ausgelaugten Kaffeekuchens zu unterstützen, kann zusätzlich ein nicht näher eingezeichneter Abstreifer vorgesehen werden. Das Brühmodul 4 befindet sich nunmehr wieder in seiner Ausgangsstellung, in welcher es aus dem Gehäuse 1 herausgenommen werden kann. Das aus dem Gehäuse 1 herausgenommene Brühmodul 4 kann sehr einfach gereinigt werden, indem es beispielsweise unter fliessendes Wasser gehalten wird.

Das Reinigen des in der Kaffeemaschine verbleibenden Verschlusskolbens kann beispielsweise von aussen mit einem Pinsel erfolgen. Eine andere Möglichkeit besteht darin, ein Spülprogramm vorzusehen, bei welchem der Verschlusskolben von Heisswasser durchströmt wird ohne dass das Brühmodul in die Kaffeemaschine eingesetzt ist, oder, bei eingesetztem Brühmodul, ohne dass im Brühzylinder Kaffeepulver aufgenommen ist. Da der Verschlusskolben nicht mit dem aufgebrühten Kaffeegetränk in Berührung kommt, genügt eine solche Reinigung im Normalfall.

Durch den am Heisswasserbereiter 2 angeformten Verschlusskolben 3 kann einerseits die bisher notwendige Verbindungsleitung zwischen dem Heisswasserbereiter 2 und dem Verschlusskolben 3 wegfallen. Zum anderen wird der Verschlusskolben 3 durch den Heisswasserbereiter 2 erwärmt. Beides trägt dazu bei, dass die Temperatur des Brühwassers beim Eintritt in die Brühkammer jeweils eine konstante, vorbestimmte Temperatur aufweist und das Kaffeepulver vom Brühwasser immer mit der optimalen Temperatur durchströmt werden kann.

Durch das vorgängig erläuterte Brühmodul und den fest in der Kaffeemaschine eingebauten Verschlusskolben, kann die Kaffeemaschine ausserdem sehr kompakt aufgebaut werden. Zudem ist das Brühmodul aus einer vergleichsweise geringen Anzahl Elementen aufgebaut, was eine hohe Zuverlässigkeit sicherstellt und ausserdem eine kostengünstige Fertigung erlaubt. Dadurch, dass der Brühzylinder 6 und der Brühkolben 5 längsbeweglich, jedoch schwenkfest angeordnet sind, kann auf einen Schwenkmechanismus zum Verschwenken des Brühzylinders von einer Füll- in eine Brühstellung verzichtet werden, was sich wiederum positiv auf die Fertigungskosten und die Anzahl der Bauelemente auswirkt.

## Patentansprüche

1. Kaffeemaschine mit einem Heisswasserbereiter (2) zum Erhitzen des Brühwassers, einem eine Brühkammer (B) begrenzenden Brühzylinder (6), einem Verschlusskolben (3) zum endseitigen Verschliessen des Brühzylinders (6) sowie einem beweglich im Brühzylinder (6) angeordneten Brühkolben (5) zum Verdichten des Kaffeepulvers und/oder zum Ausstossen des ausgelaugten Kaffeekuchens, **dadurch gekennzeichnet, dass** der Verschlusskolben (3) am Heisswasserbereiter (2) angeformt oder direkt an diesem befestigt ist.

2. Kaffeemaschine nach Anspruch 1, **dadurch gekennzeichnet, dass** der Verschlusskolben (3) als Fortsatz des Heisswasserbereiters (2) ausgebildet ist.

3. Kaffeemaschine nach Anspruch 1 oder 2, **dadurch gekennzeichnet, dass** der Verschlusskolben (3) im wesentlichen hohl ausgebildet ist und dass der Innenraum (30) des Verschlusskolbens (3) mit dem Innenraum des Heisswasserbereiters (2) in Verbindung steht und mit erhitztem Brühwasser geflutet ist.

4. Kaffeemaschine nach Anspruch 1 oder 2, **dadurch gekennzeichnet, dass** der Heisswasserbereiter (2) zusammen mit dem Verschlusskolben (3) fest in die Kaffeemaschine eingebaut sind und dass ein lösbar in die Kaffeemaschine eingesetztes Brühmodul (4) vorgesehen ist, welches zumindest den Brühzylinder (6) und den Brühkolben (5) umfasst.

5. Kaffeemaschine nach einem der vorhergehenden Ansprüche, **dadurch gekennzeichnet, dass** die Längsachse des in die Kaffeemaschine eingesetzten Brühmoduls (4) im wesentlichen vertikal verläuft.

6. Kaffeemaschine nach Anspruch 5, **dadurch gekennzeichnet, dass** der Heisswasserbereiter (2) oberhalb des Brühzylinders (6) angeordnet ist.

7. Kaffeemaschine nach einem der Ansprüche 1 bis 4, **dadurch gekennzeichnet, dass** die Längsachse des in die Kaffeemaschine eingesetzten Brühmoduls (4) im wesentlichen horizontal verläuft.

8. Kaffeemaschine nach einem der vorhergehenden Ansprüche, **dadurch gekennzeichnet, dass** der Brühzylinder (6) und der Brühkolben (5) längsbeweglich jedoch schwenkfest angeordnet sind.

9. Kaffeemaschine nach Anspruch 7 oder 8, **dadurch gekennzeichnet, dass** der Brühzylinder (6) mit zumindest einer radialen Öffnung (62, 63) zum Zuführen von Kaffeepulver versehen ist.

10. Kaffeemaschine nach einem der vorhergehenden Ansprüche, **dadurch gekennzeichnet, dass** der Verschlusskolben (3) mit einer hohlzylindrisch ausgebildeten Kammer (32) versehen ist, in der ein Ventil (36) aufgenommen ist.

11. Kaffeemaschine nach Anspruch 10, **dadurch gekennzeichnet, dass** das Ventil (36) als Rückschlagventil und/oder Überdruckventil ausgebildet ist.

12. Kaffeemaschine nach einem der vorhergehenden Ansprüche, **dadurch gekennzeichnet, dass** der Verschlusskolben (3) endseitig mit einer Vertiefung (33) versehen ist, die von einer Siebplatte (34) abgedeckt ist, wobei die Vertiefung (33) mit dem Auslass des Ventils (36) verbunden ist.

13. Kaffeemaschine nach einem der vorhergehenden Ansprüche, **dadurch gekennzeichnet, dass** das Gehäuse des Heisswasserbereiters (2) im wesentlichen aus zwei Halbschalen (21, 22) besteht, wovon die eine mit dem Verschlusskolben (3) versehen ist.

14. Kaffeemaschine nach Anspruch 13, **dadurch gekennzeichnet, dass** die Halbschalen (21, 22) aus Metall, vorzugsweise aus Aluminium bestehen.

15. Kaffeemaschine nach einem der vorhergehenden Ansprüche, **dadurch gekennzeichnet, dass** der Vorderteil des Verschlusskolbens (3) aus Kunststoff gefertigt ist.

16. Kaffeemaschine nach Anspruch 15, **dadurch gekennzeichnet, dass** die hohlzylindrisch ausgebildete Kammer (32) in den Kunststoffteil eingelassen ist.

17. Kaffeemaschine nach einem der vorhergehenden Ansprüche, **dadurch gekennzeichnet, dass** ein Spindelantrieb zum Bewegen des Brühzylinders (6) vorgesehen ist.

18. Kaffeemaschine nach Anspruch 17, **dadurch gekennzeichnet, dass** der Brühzylinder (6) mit einem Aussengewinde (61) versehen ist und dass das Brühmodul (4) ein konzentrisch zum Brühzylinder (6) angeordnetes, drehbares Betätigungsglied (7) aufweist, welches auf der Innenseite mit einem Gewinde (71) versehen ist, das mit dem Aussengewinde (61) des Brühzylinders (6) im Eingriff ist, wobei das Betätigungsglied (7) auf der Aussenseite als Zahnrad (72) ausgebildet ist und die Zähne des Zahnrads (72) mit einem Antriebsglied (81) eines für die Bewegung des Brühzylinders (6) vorgesehenen Antriebsmotors (8) in Eingriff bringbar sind.

19. Kaffeemaschine nach Anspruch 17 oder 18, **dadurch gekennzeichnet, dass** der Antriebsmotor (8) seitlich des Brühmoduls (6) angeordnet ist.

## Claims

1. Coffee machine having a hot-water generator (2) for heating the brewing water, having a brewing cylinder (6) which bounds a brewing chamber (B), having a closure piston (3) for closing the brewing cylinder (6) at the end, and having a brewing piston (5) which is arranged in a movable manner in the brewing cylinder (6) and is intended for compacting the coffee powder and/or for ejecting the used-up coffee mass, **characterized in that** the closure piston (3) is integrally formed on the hot-water generator (2) or fastened directly thereon.

2. Coffee machine according to Claim 1, **characterized in that** the closure piston (3) is designed as a continuation of the hot-water generator (2).

3. Coffee machine according to Claim 1 or 2, **characterized in that** the closure piston (3) is of essentially hollow design, and **in that** the interior (30) of the closure piston (3) is connected to the interior of the hot-water generator (2) and is flooded with heated brewing water.

4. Coffee machine according to Claim 1 or 2, **characterized in that** the hot-water generator (2) together with the closure piston (3) are firmly installed in the coffee machine, and **in that** there is provided a brewing module (4) which is inserted releasably into the coffee machine and comprises at least the brewing cylinder (6) and the brewing piston (5).

5. Coffee machine according to one of the preceding claims, **characterized in that** the longitudinal axis of the brewing module (4) inserted into the coffee machine runs essentially vertically.

6. Coffee machine according to Claim 5, **characterized in that** the hot-water generator (2) is arranged above the brewing cylinder (6).

7. Coffee machine according to one of Claims 1 to 4, **characterized in that** the longitudinal axis of the brewing module (4) inserted into the coffee machine runs essentially horizontally.

8. Coffee machine according to one of the preceding claims, **characterized in that** the brewing cylinder (6) and the brewing piston (5) are arranged such that they can be moved longitudinally but cannot be pivoted.

9. Coffee machine according to Claim 7 or 8, **characterized in that** the brewing cylinder (6) is provided with at least one radial opening (62, 63) for feeding coffee powder.

10. Coffee machine according to one of the preceding claims, **characterized in that** the closure piston (3) is provided with a hollow-cylindrical chamber (32) in which a valve (36) is accommodated.

11. Coffee machine according to Claim 10, **characterized in that** the valve (36) is designed as a non-return valve and/or pressure relief valve.

12. Coffee machine according to one of the preceding claims, **characterized in that** the closure piston (3) is provided, at the end, with a depression (33) which is covered by a screen plate (34), the depression (33) being connected to the outlet of the valve (36).

13. Coffee machine according to one of the preceding claims, **characterized in that** the housing of the hot-water generator (2) essentially comprises two half-shells (21, 22), of which one is provided with the closure piston (3).

14. Coffee machine according to Claim 13, **characterized in that** the half-shells (21, 22) consist of metal, preferably of aluminium.

15. Coffee machine according to one of the preceding claims, **characterized in that** the front part of the closure piston (3) is produced from plastic.

16. Coffee machine according to Claim 15, **characterized in that** the hollow-cylindrical chamber (32) is incorporated in the plastic part.

17. Coffee machine according to one of the preceding claims, **characterized in that** a spindle drive is provided for moving the brewing cylinder (6).

18. Coffee machine according to Claim 17, **characterized in that** the brewing cylinder (6) is provided with an external thread (61), and **in that** the brewing module (4) has a rotatable actuating element (7) which is arranged concentrically in relation to the brewing cylinder (6) and is provided, on the inside, with a thread (71) which engages with the external thread (61) of the brewing cylinder (6), the actuating element (7) being designed, on the outside, as a gearwheel (72) and it being possible for the teeth of the gearwheel (72) to be brought into engagement with a drive element (81) of a drive motor (8) provided for moving the brewing cylinder (6).

19. Coffee machine according to Claim 17 or 18, **characterized in that** the drive motor (8) is arranged to the side of the brewing cylinder (4).

## Revendications

1. Machine à café avec un chauffe-eau (2) pour le réchauffage de l'eau de percolation, un cylindre de percolation (6) limitant une chambre de percolation (B), un piston de fermeture (3) pour fermer le cylindre de percolation (6) à son extrémité ainsi qu'un piston de percolation (5) disposé mobile dans le cylindre de percolation (6) pour comprimer la poudre de café et / ou pour éjecter le gâteau de marc de café épuisé, **caractérisé en ce que** le piston de fermeture (3) est venu de moulage sur le chauffe-eau (2) ou est directement fixé à ce dernier.

2. Machine à café selon la revendication 1, **caractérisée en ce que** le piston de fermeture (3) est configuré comme prolongement du chauffe-eau (2).

3. Machine à café selon une des revendications 1 ou 2, **caractérisée en ce que** le piston de fermeture (3) est configuré essentiellement creux et que l'espace intérieur (30) du piston de fermeture (3) communique avec l'espace intérieur du chauffe-eau (2) et est noyé par l'eau de percolation chauffée.

4. Machine à café selon une des revendications 1 ou 2, **caractérisée en ce que** le chauffe-eau (2) est intégré à demeure avec le piston de fermeture (3) dans la machine à café et qu'un module de percolation (4) utilisé de façon démontable dans la machine à café est prévu, qui comprend au moins le cylindre de percolation (6) et le piston de percolation (5).

5. Machine à café selon une des revendications ci-avant, **caractérisée en ce que** l'axe longitudinal du module de percolation (4) utilisé dans la machine à café s'étend essentiellement verticalement.

6. Machine à café selon la revendication 5, **caractérisée en ce que** le chauffe-eau (2) est disposé au-dessus du cylindre de percolation (6).

7. Machine à café selon une des revendications 1 à 4, **caractérisée en ce que** l'axe longitudinal du module de percolation (4) utilisé dans la machine à café s'étend essentiellement horizontalement.

8. Machine à café selon une des revendications ci-avant, **caractérisée en ce que** le cylindre de percolation (6) et le piston de percolation (5) sont disposés mobiles longitudinalement, mais immobiles dans lesens de la rotation.

9. Machine à café selon une des revendications 7 ou 8, **caractérisée en ce que** le cylindre de percolation (6) est doté d'au moins une ouverture radiale (62, 63) pour introduire la poudre de café.

10. Machine à café selon une des revendications ci-avant, **caractérisée en ce que** le piston de fermeture (3) est doté d'une chambre (32) en forme de cylindre creux, dans laquelle est compriseune valve (36).

11. Machine à café selon la revendication 10, **caractérisée en ce que** la valve (36) est conçue comme clapet antiretour et / ou comme valve de décharge.

12. Machine à café selon une des revendications ci-avant, **caractérisée en ce que** le piston de fermeture (3) est doté à son extrémité d'un renfoncement (33), qui est recouvert d'une plaque de tamis (34), le renfoncement (33) étant en communication avec la sortie de la valve (36).

13. Machine à café selon une des revendications ci-avant, **caractérisée en ce que** le corps du chauffe-eau (2) consiste essentiellement en deux demi-coquilles (21, 22) dont l'une est dotée du piston de fermeture (3).

14. Machine à café selon la revendication 13, **caractérisée en ce que** les demi-coquilles (21, 22) sont en métal, de préférence en aluminium.

15. Machine à café selon une des revendications ci-avant, **caractérisée en ce que** la partie avant du piston de fermeture (3) est réalisée en plastique.

16. Machine à café selon la revendication 15, **caractérisée en ce que** la chambre (32) en forme de cylindre creux est pratiquée dans la pièce en plastique.

17. Machine à café selon une des revendications ci-avant, **caractérisée en ce qu'**un entraînement à vis est prévu pour déplacer le cylindre de percolation (6).

18. Machine à café selon la revendication 17, **caractérisée en ce que** le cylindre de percolation (6) est doté d'un filetage extérieur (61) et **en ce que** le module de percolation (4) présente un élément d'actionnement (7) tournant disposé concentriquement au cylindre de percolation (6), élément qui est doté à sa face intérieure d'un filet (71) qui est en prise avec le filetage extérieur (61) du cylindre de percolation (6), l'élément d'actionnement (7) étant configuré à sa face extérieure comme pignon (72) et les dents du pignon (72) pouvant être amenées en prise avec un élément d'entraînement (81) d'un moteur d'entraînement (8) prévu pour le déplacement du cylindre de percolation (6).

19. Machine à café selon une des revendications 17 ou 18, **caractérisée en ce que** le moteur d'entraînement (8) est disposé latéralement par rapport au module de percolation (4).
